## Europäisches Patentamt
## European Patent Office
## Office européen des brevets

(19)

(11) Veröffentlichungsnummer: **0 113 351**
**B1**

(12) **EUROPÄISCHE PATENTSCHRIFT**

(45) Veröffentlichungstag der Patentschrift:
**13.08.86**

(51) Int. Cl.⁴: **F 16 H 1/46**

(21) Anmeldenummer: **83900630.1**

(22) Anmeldetag: **14.02.83**

(86) Internationale Anmeldenummer:
**PCT/EP 83/00034**

(87) Internationale Veröffentlichungsnummer:
**WO 83/02810 (18.08.83 Gazette 83/19)**

(54) **UMLAUFRÄDERGETRIEBE.**

(30) Priorität: **13.02.82 DE 3205208**

(43) Veröffentlichungstag der Anmeldung:
**18.07.84 Patentblatt 84/29**

(45) Bekanntmachung des Hinweises auf die Patenterteilung:
**13.08.86 Patentblatt 86/33**

(84) Benannte Vertragsstaaten:
**CH DE FR GB LI**

(56) Entgegenhaltungen:
**FR-A-1 249 299**
**FR-A-2 372 999**
**GB-A-203 107**
**GB-A-1 546 915**
**GB-A-2 033 530**

(73) Patentinhaber: **ZAHNRÄDERFABRIK RENK AKTIENGESELLSCHAFT, Gögginger Strasse 71 - 83, D-8900 Augsburg (DE)**

(72) Erfinder: **HIRT, Manfred, Lauterlech 39 c, D-8900 Augsburg (DE)**
Erfinder: **ARNDT, Heinrich, Max- Reger- Strasse 1, D-8900 Augsburg 22 (DE)**

LIBER, STOCKHOLM 1986

EP 0 113 351 B1

## Beschreibung

Die Erfindung betrifft ein Umlaufrädergetriebe mit mindestens zwei koaxial hintereinander angeordneten, trieblich miteinander verbundenen Planetengetriebestufen, von denen die eine Planetengetriebestufe weniger und die andere Planetengetriebestufe mehr Planetenräder enthält, die Planetenräder und deren Lager bei beiden Planetengetriebestufen gleich ausgebildet sind, und die Planetenräder der einen Planetengetriebestufe in einer gemeinsamen Getriebeachsen-Querebene und die Planetenräder der anderen Stufe in einer anderen gemeinsamen Getriebeachsen-Querebene angeordnet sind.

Ein solches Umlaufrädergetriebe zeigen die GB-A-879 040 und 1 546 915. Der Text dieser Schriften sagt allerdings nichts darüber aus, ob die Planetenräder und deren Lager bei beiden Planetengetriebestufen tatsächlich gleich ausgebildet sind. Bei diesem bekannten Umlaufrädergetriebe haben die inneren Sonnenräder und die Äußeren Hohlräder bei beiden Stufen den gleichen Durchmesser.

Wenn beide Planetengetriebestufen für die Übertragung der gleichen Antriebsleistung ausgelegt sind, dann muß trotzdem die mit langsamerer Drehzahl laufende Planetengetriebestufe, wegen der dadurch auftretenden höheren Drehmomente, für eine höhere Belastung und damit stärker ausgebildet werden. Zu diesem Zwecke haben die vorstehend genannten bekannten Getriebe in der nachfolgenden Planetengetriebestufe drei Planetenräder, in der vorangehenden Planetengetriebestufe jedoch nur zwei Planetenräder. Für die Übertragung größerer Leistungen werden jedoch bei bekannten Umlaufrädergetrieben in den nachfolgenden Planetengetriebestufen die Planetenräder, inneren Sonnenräder und Äußeren Hohlräder im Durchmesser und in der Breite größer ausgebildet als in der vorangehenden Planetengetriebestufe, wie dies aus folgenden Schriften bekannt ist: GB-A-203 107 und 2 033 530, US-A-3 062 073 und DD-A-34 215. Eine Zwischenlösung der beiden vorstehend genannten Getriebearten ist aus der FR-A-1 249 299 bekannt. Diese Schrift zeigt ein dreistufiges Planetengetriebe, bei welchem die Sonnenräder der drei Stufen aufeinanderfolgend größeren Durchmesser haben, während die Planetenräder der drei Stufen aufeinanderfolgend kleinere Durchmesser haben und das Äußere Hohlrad für alle drei Stufen den gleichen Durchmesser hat.

Die Zeitschrift "Konstruktion, 13 (1961), Heft 2", zeigt auf den Seiten 67 bis 70 Berechnungsmöglichkeiten zur gleichmäßigen Aufteilung der Planetenräder. Im Unterschied dazu zeigt die FR-A-2 372 999 ein Umlaufrädergetriebe mit drei Planetenrädern in der ersten Stufe und sechs Planetenrädern in der zweiten Stufe, wobei die sechs Planetenräder in Zweier-Gruppen gruppiert sind.

Durch die Erfindung soll die Aufgabe gelöst werden, Umlaufrädergetriebe der eingangs genannten Art leichter und kleiner sowie preislich billiger und in der Anwendung vielseitiger auszubilden, bei gleicher übertragbarer Leistung.

Diese Aufgabe wird gemäß der Erfindung dadurch gelöst, daß der Wälzkreisdurchmesser des Sonnenrades und der Wälzkreisdurchmesser des Hohlrades der anderen Planetengetriebestufe größer ist als bei der einen Planetengetriebestufe, und daß beide Stufen für ungefähr gleiche Linienbelastung der Zähne der Sonnenräder, Planetenräder und Hohlräder (Kraft pro Zahnbreite in der Berührungslinie von zwei aneinander anliegenden Zähnen) ausgebildet sind.

Durch die Erfindung lassen sich Gewichtseinsparungen bis zu 50 % erzielen. Ferner können die Sonnenräder mit großen axialen Durchgangsöffnungen versehen werden, ohne daß das Sonnenrad nachteilig geschwächt wird.

Eine Ausführungsform der Erfindung ist in der beiliegenden Zeichnung als Beispiel dargestellt und wird im folgenden beschrieben. Darin zeigen

Fig. 1 einen Axialschnitt eines Getriebes nach der Erfindung und

Fig. 2 eine schematische Stirnansicht der größeren Planetengetriebestufe.

Auf der Antriebsseite des Umlaufrädergetriebes greift ein rohrförmiges Kupplungsstück 1 mit einem von zwei Kupplungszahnkränzen 2 in eine Kupplungs-Innenverzahnung 3 des hohlen Sonnenrades 4 einer Planetengetriebestufe 5 ein. Zwischen diesem Sonnenrad 4 und einem Hohlrad 6 der Planetengetriebestufe 5 befinden sich Planetenräder 7. Diese sind durch Pendelrollenlager 8 auf Lagerzapfen 9 eines Planetenträgers 10 drehbar gelagert.

Der Planetenträger 10 der einen Planetengetriebestufe 5 hat eine axiale Durchgangsöffnung 11 mit einer Kupplungs-Innenverzahnung 12, in welche der eine Zahnkranz 13 eines rohrartigen Zahnkupplungsstückes 14 einer Doppelgelenkzahnkupplung eingreift, dessen anderer Zahnkranz 13 in die Kupplungs-Innenverzahnung 15 eines mit einer axialen Durchgangsöffnung versehenen Sonnenrades 16 einer weiteren Planetengetriebestufe 17 eingreift. Die Planetenräder 7 dieser anderen Planetengetriebestufe 17 sind mit der Außenverzahnung des Sonnenrades 16 und nit der Innenverzahnung des Hohlrades 18 dieser Stufe 17 in Eingriff. Die Planetenräder 7 dieser Stufe 17 sind über Pendelrollenlager 8 auf Zapfen 22 eines Planetenträgers 23 dieser Stufe 17 drehbar gelagert. Der Planetenträger ist mit einer axialen Durchgangs-Öffnung 24 und auf seiner Abtriebsseite mit einem hohlen Flansch 25 zum Anschluß an eine anzutreibende Maschine versehen.

Die Planetenräder 7 und die Pendelrollenlager 8 sind bei beiden Planetengetriebestufen 5 und 17 gleich ausgebildet, Die Planetenräder 7 sind sowohl in der Stufe 5 als auch in der Stufe 17 jeweils in einer gemeinsamen, zur Getriebeachse 26 quer verlaufenden Ebene angeordnet. Dies ist hinsichtlich Gewicht, Größe und Kosten günstiger als eine Ausführungsform, bei welcher beispielsweise zwei Planetenräder 7 in einer Planetengetriebestufe axial hintereinander angeordnet sind und dabei im wesentlichen doppelt so breite Sonnenräder und Hohlräder benötigen als bei der Erfindung. Die eine Planetengetriebestufe 5 enthält weniger und die andere Planetengetriebestufe 17 enthält mehr Planetenräder 7. Vorzugsweise hat entsprechend der dargestellten Ausführungsform die eine Planetengetriebestufe 5 drei Planetenräder 7 und die andere Planetengetriebestufe 17 sechs Planetenräder 7. In der Planetengetriebestufe 17 sind wegen der niedrigeren Drehzahl größere Kräfte zu übertragen als in der Getriebestufe 5. Durch die Verwendung von entsprechend mehr Planetenräder 7 in der Stufe 17 als in der Stufe 5, kann jedoch im wesentlichen eine gleiche Zahnbelastung der einzelnen Zähne erreicht werden. Dadurch können in beiden Stufen 5 und 17 gleiche Planetenräder 7 und gleiche Lager 8 verwendet werden, was eine rationellere und kostengünstigere Fertigung und Vorratshaltung ermöglicht. Ferner hat die geringere Belastung eines Planetenrades 7 gegenüber den bekannten größeren Ausführungsformen den Vorteil, daß auch in der höher belasteten Stufe 17 Pendelrollenlager 21 anstelle von Zylinderrollenlagern verwendet werden können. Die Außenverzahnung 31 des Sonnenrades 16 hat einen größeren Wälzkreisdurchmesser als die Außenverzahnung 32 des Sonnenrades 4. Ebenso hat die Innenverzahnung 33 des Hohlrades 18 der anderen Stufe 17 einen größeren Wälzkreisdurchmesser als die Innenverzahnung 34 des Hohlrades 6 der einen Stufe 5. Durch die Verwendung von mehreren Planetenräder 7 in der anderen Stufe 17 mit verhältnismäßig kleinem Wälzkreisdurchmesser, wie in der einen Stufe 5, hat auch das Hohlrad 18 der anderen Stufe 17 nur einen geringfügig größeren Außendurchmesser als das Hohlrad 6 der einen Stufe 5. Dadurch erhält man insgesamt kleine Außendurchmesser. Durch die ebenfalls günstigen, verhältnismäßig großen Durchmesser der Sonnenräder 4 und 16 und der auf viele Zähne verteilten Antriebskräfte in beiden Stufen 5 und 17 ist auch eine durch das gesamte Umlaufrädergetriebe axial hindurchführende Durchgangsöffnung 41 zur Gewichtseinsparung und zum Hindurchführen von Anlagenteilen möglich.

Vorzugsweise sind die beiden Stufen 5 und 17 so ausgebildet, daß in beiden ungefähr die gleiche Linienbelastung der Zähne der Zahnräder auftritt. Mit Linienbelastung ist hierbei die Kraft pro Zahnbreite in der Berührungslinie zwischen zwei aneinander anliegenden Zähnen gemeint. Dadurch können beide Stufen 5 und 17 maximal belastet und somit bei kleinsten baulichen Abmessungen die größte Leistung übertragen werden. In der Praxis wird man häufig von dieser gleichen Belastbarkeit geringfügig abweichen, weil man gerne aus Sicherheitsgründen die vorletzte Stufe 5 etwas stärker belastbar ausbildet als die letzte Stufe 17.

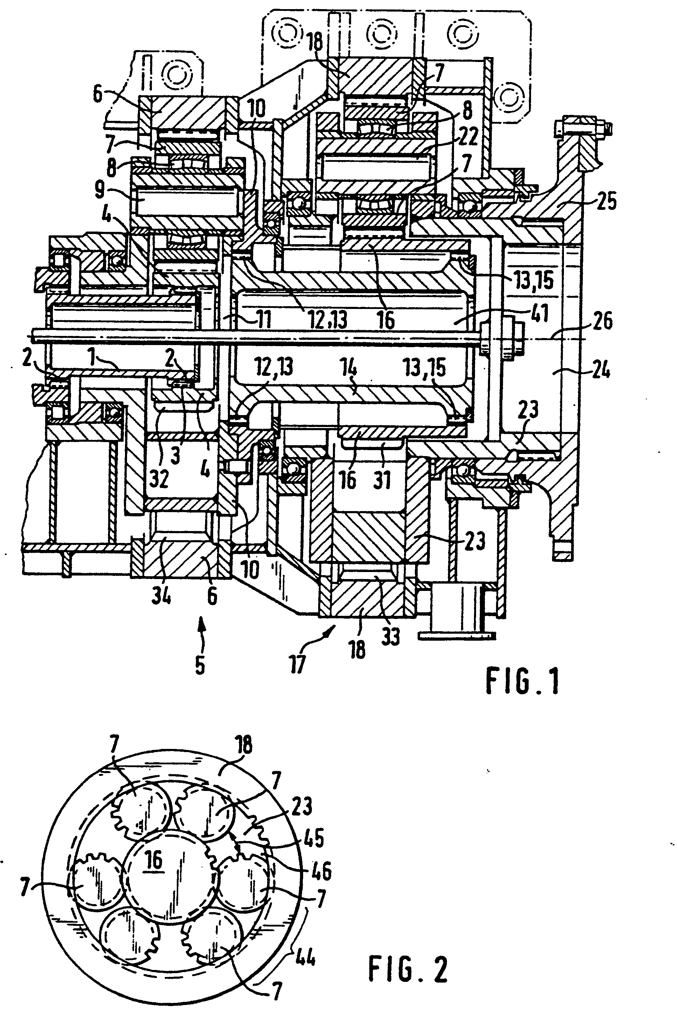

Besonders kleine Abmessungen und große Übersetzungsverhältnisse bei großen Antriebsleistungen lassen sich dann erzielen, wenn in der genannten Weise die eine Stufe 5 drei Planetenräder 7 und die andere Stufe 17 sechs Planetenräder 7 enthält und außerdem in dieser anderen Stufe 17 die Planetenräder 7 in Gruppen von je zwei Planetenrädern 7 angeordnet sind, wobei die Planetenräder 7 jeder Gruppe 44 sehr eng beieinander angeordnet sind, während zwischen benachbarten Gruppen 44 die Planetenräder 7 einen verhältnismäßig großen Umfangsabstand 45 voneinander haben, wie dies in Figur 2 dargestellt ist. Dadurch hat der Planetenträger 23 zwischen benachbarten Planetenrädergruppen 44 in Umfangsrichtung verhältnismäßig große Materialguerschnitte 46, die dem Planetenträger 23 eine ausreichende Steifheit auch bei Verwendung von verhältnismäßig vielen Planetenrädern 7 geben.

**Patentansprüche**

1. Umlaufrädergetriebe mit mindestens zwei koaxial hintereinander angeordneten, trieblich miteinander verbundenen Planetengetriebestufen, von denen die eine Planetengetriebestufe (5) weniger und die andere Planetengetriebestufe (17) mehr Planetenräder (7) enthält, die Planetenräder und deren Lager bei beiden Planetengetriebestufen gleich ausgebildet sind, und die Planetenräder (7) der einen Planetengetriebestufe (5) in einer gemeinsamen Getriebeachsen-Querebene und die Planetenräder (7) der anderen Stufe (17) in einer anderen gemeinsamen Getriebeachsen-Querebene angeordnet sind, dadurch gekennzeichnet, daß der Wälzkreisdurchmesser des Sonnenrades (16) und der Wälzkreisdurchmesser des Hohlrades (18) der anderen Planetengetriebestufe (17) größer ist als bei der einen Planetengetriebestufe (5), und daß beide Stufen (5, 17) für ungefähr gleiche Linienbelastung der Zähne der Sonnenräder, Planetenräder und Hohlräder (Kraft pro Zahnbreite in der Berührungslinie Von zwei aneinander anliegenden Zähnen) ausgebildet sind.

2. Getriebe nach Anspruch 1, dadurch gekennzeichnet, daß die eine Planetengetriebestufe (5) drei und die andere Planetengetriebestufe (17) sechs Planetenräder (7) hat.

3. Getriebe nach Anspruch 1 oder 2, dadurch gekennzeichnet, daß die Planetenräder (7) der anderen Planetengetriebestufe (17) in Zweier-Gruppen gruppiert sind, wobei jeweils der Abstand zwischen den beiden Planetenrädern (7) einer Gruppe (44) relativ klein und der Abstand (45) zwischen den Planetenrädern (7) benachbarter Gruppen (44) relativ groß ist.

4. Getriebe nach einem der Ansprüche 1 bis 3,
_dadurch gekennzeichnet,_
daß durch beide Planetengetriebestufen (5, 17) eine axiale Durchgangsöffnung (41) hindurchführt.

## Claims

1. Planetary gear with at least two planetary gear stages arranged coaxially one behind the other and connected to each other in a driving arrangement, one planetary gear stage (5) containing fewer, and the other planetary gear stage (17) more, planet wheels (7), wherein the planet wheels and their bearings in both planetary gear stages are formed to be alike, the planet wheels (7) of one planetary gear stage (5) are arranged in one common transverse gear shaft plane and the planet wheels (7) of the other stage (17) are arranged in another common transverse gear shaft plane, characterised in that the rolling circle diameter of the sun wheel (16) and the rolling circle diameter of the internal geared wheel (18) of the other planetary gear stage (17) is larger than in the one planetary gear stage (5) and in that both stages (5, 17) are arranged for approximately the same linear loading of the teeth of the sun wheels, planet wheels and internal geared wheels (force per tooth width in the line of contact of two adjacent teeth).

2. Gear according to claim 1 characterised in that the one planetary gear stage (5) has three and the other planetary gear stage (17) has six planet wheels (7).

3. Gear according to claim 1 and 2, characterised in that the planet wheels (7) of the other planetary gear stage (17) are grouped in groups of two, the distance between the two planet wheels (7) of one group (44) being relatively small and the distance (45) between the planet wheels (7) of neighbouring groups (44) being relatively large.

4. Gear according to one of claims 1 to 4, characterised in that both planetary gear stages (5, 17) are fed through an axial through opening (41).

## Revendications

1. Engrenage épicycloïdal muni d'au moins deux étages d'engrenages planétaires disposés coaxialement l'un derrière l'autre, en liaison de transmission entre eux, dont l'un (5) des étages d'engrenages planétaires contient moins de satellites (7) et l'autre étage d'engrenages planétaires (17) contient plus de satellites, les satellites et leurs paliers étant constitués de la même façon dans les deux étages d'engrenages planétaires et les satellites (7) de l'un (5) des étages d'engrenages planétaires étant disposés dans un plan commun transversal à l'axe de l'engrenage et les satellites de l'autre étage (17) dans un autre plan commun transversal à l'axe de l'engrenage caractérisé en ce que le diamètre du cercle primitif de la roue planétaire (16) et le diamètre du cercle primitif de la couronne (18) de l'autre étage d'engrenages planétaires (17) sont plus grands que dans l'un (5) des étages d'engrenages planétaires, et en ce que les deux étages (5, 17) sont conçus pour une charge de ligne à peu près égale des dents des roues planétaires, des satellites et des couronnes (force relativement à la largeur des dents dans la ligne de contact de deux dents appliquées l'une contre l'autre).

2. Engrenage selon la revendication 1 caractérisé en ce que l'un (5) des étages d'engrenages planétaires présente trois satellites (7) et l'autre étage d'engrenages planétaires (17), six satellites (7).

3. Engrenage selon l'une des revendications 1 et 2, caractérisé en ce que les satellites (7) de l'autre étage d'engrenages planétaires (17) sont groupés en groupes de deux l'espacement entre les deux satellites (7) d'un groupe (44) étant relativement petit et l'espacement (45) entre les satellites (7) de groupes voisins (44) étant relativement grand.

4. Engrenage selon l'une des revendications 1 à 3, caractérisé en ce qu'à travers les deux étages d'engrenages planétaires (5, 17) passe une ouverture axiale de passage (41).

**FIG.1**

**FIG. 2**